# FASCICULE DE BREVET EUROPEEN

(11) **EP 1 041 892 B1**
(45) Date de publication et mention de la délivrance du brevet: **09.04.2003**
(21) Numéro de dépôt: 98966707.6
(22) Date de dépôt: 24.12.1998
(51) Int. Cl.: A23C 19/068, A23C 19/05

(54) **FABRICATION D'UN FROMAGE DE TYPE MOZZARELLA**
HERSTELLUNG VON MOZZARELLAKÄSE
METHOD FOR MAKING A MOZZARELLA TYPE CHEESE

(30) Priorité: 29.12.1997 EP 97204134
(43) Date de publication de la demande: 11.10.2000
(73) Titulaire: SOCIETE DES PRODUITS NESTLE S.A., 1800 Vevey (CH)
(72) Inventeur: RENIERO, Roberto, CH-1801 Le Mont-Pélerin (CH); BISSON, Jean-Pierre, F-14000 Caen (FR); PARMANTIER, Claude, F-14100 Glos (FR); D'AMICO, Nicola, CH-1436 Treycovagnes (CH)
(74) Mandataire: Archambault, Jean
(86) Numéro de dépôt international: EP9808569
(87) Numéro de publication internationale: WO99033351

(56) Documents cités:
- EP-A- 0 312 359
- US-A- 4 948 599
- US-A- 5 431 931
- R. LIFE: "Functionality of low fat mozzarella cheese" JOURNAL OF DAIRY SCIENCE, vol. 79, 1996, pages 1903-1910, XP000639835 CHAPAIGN, ILLINOIS US
- DATABASE FSTA INTERNATIONAL FOOD INFORMATION SERVICE (IFIS), FRANFURT/MAIN, DE AN=81-2-01-p0131, NELLES J ET AL: "(In 'Proceedings from the first biennial Marschall International Cheese Conference' ((see FSTA (1981) 13 1P59)).)" XP002064765 & UNDATED NELLES CHEESE & EQUIPMENT INC., RFD, pages 11-13, AQUOKETA, IOWA 52060, USA

## Description

La présente invention a pour objet un procédé de préparation d'un fromage de type mozzarella.

Traditionnellement, il est connu de préparer le fromage de type mozzarella à partir d'un lait cru que l'on fermente avec un starter naturel dont les souches bactériennes ne sont pas caractérisées. Par ajout de présure, ce lait cru fermenté est alors coagulé sous forme d'un caillé qui est découpé et brassé, puis séparé du sérum. Le caillé est égoutté et acidifié en moule, en présence de bactéries thermophiles, pendant 2 à 6h. Ce caillé est ensuite découpé en morceaux et trempé dans de l'eau à 90° C, pour être filé et ainsi obtenir un fromage de type mozzarella.

La procédé traditionnel artisanal de préparation d'un fromage de type mozzarella est long et présente des manipulations successives qui sont difficiles à gérer industriellement.

Par ailleurs, la demande de brevet FR 2555 865 décrit un procédé de préparation d'une pâte à l'arôme de fromage pouvant être utilisée pour l'aromatisation de compositions alimentaires, par exemple, des fromages fondus. Au cours de ce procédé, un concentré de lait, ayant une teneur en extrait sec de 30%, est soumis à une première étape de fermentation par des souches bactériennes thermophiles, suivie d'une seconde étape de fermentation par des souches bactériennes mésophiles et/ou cryophiles. La pâte à l'arôme fromage ainsi obtenue est ensuite pasteurisée et ajoutée à une composition alimentaire, de manière à renforcer le caractère aromatique.

Le procédé décrit dans la demande de brevet FR 2555 865 permet de palier au manque de note aromatique pouvant être rencontrée dans la fabrication industrielle de certaines compositions alimentaires, en ajoutant à celles-ci une pâte à l'arôme fromage, obtenue par fermentation d'un lait concentré par des souches bactériennes mésophiles et des souches bactériennes thermophiles traditionnellement utilisées par les fromagers.

Bien que permettant une amélioration de l'aromatisation de compositions alimentaires, la demande de brevet FR 2555 865 ne propose pas un procédé industriel simple et rapide de fabrication de fromages et, plus particulièrement, de fromages de type mozzarella.

EP-A-312359 se rapporte à un procédé de fabrication de fromage de type Mozzarella, dont le but est d'augmenter le rendement en fromage par un traitement de préacidification directe par des acides minéraux, suivi par un traitement thermique de pasteurisation poussée. Après refroidissement, le lait est post-acidifié par les mêmes acides, inoculé par un ferment, fermenté, emprésuré pour former un caillé, le caillé est découpé, chauffé et brassé, puis moulé.

US-A-5431931 concerne un procédé de fabrication de fromage de type à pâte filée à partir de lait écrémé ou partiellement écrémé de manière à obtenir des fromages allégés en graisse. Pour ce faire, on part de bases maigres préfermentées séchées que l'on reconstitue dans le lait écrémé et on traite ce substrat avec des ferments de type yaourt et la présure de manière à former un caillé qui subit ensuite les opérations classiques de fabrication de fromage à pâte filée.

Dans Journal of dairy science, 1996, p. 1903-1910, on décrit l'effet de la teneur en graisse du lait sur les propriétés fonctionnelles des fromages de type Mozzarella pauvres en graisse dans une fabrication comprenant un traitement de Cheddarisation avec chauffage du caillé.

US-A-4948599 se rapporte à la fabrication rapide et en continu d'une pâte fromagère à partir de lait concentré par ultrafiltration, inoculation du rétentat par des ferments lactiques et par l'acide lactique, emprésurage et chauffage en présence du perméat provenant de l'ultrafiltration pour produire un caillé qui est ensuite pétri à chaud et moulé.

Dans FSTA , 81-2-01-p.0131, on décrit la production en continu de frromage de type Mozzarella par emprésurage et addition de ferments, fermentation, chauffage, addition d'acide lactique et formation d'un caillé dans un tube vertical, découpage du caillé dans le haut du tube, reprise par une trémie chauffée, drainage du petit-lait sur une plaque tournante perforée, puis pétrissage et moulage du caillé.

Dans le domaine de l'industrie fromagère, aucun procédé simple et rapide permettant de réaliser des fromages de type mozzarella présentant un goût agréable et une consistance régulière n'est connu.

Par ailleurs, on observe des variabilités de la qualité, notamment au niveau de la texture, du goût et de la conservation des fromages de type mozzarella, lors de la fabrication industrielle.
Ces variabilités ont été identifiées comme étant liées à des problèmes de décalcification lors des étapes d'égouttage et d'acidification.

Le but de la présente invention est de proposer un procédé simple, rapide et applicable industriellement permettant de palier à ces problèmes et permettant de réaliser des fromages de type mozzarella ayant une texture typique de mozzarella et un goût crémeux de type fermier.

A cet effet, dans le procédé selon la présente invention, on fermente au moins une fraction de lait avec au moins une souche bactérienne mésophile et/ou au moins une souche bactérienne thermophile,on ajoute une portion de chacune de ces fractions à du lait, de manière à obtenir un lait aromatisé, on pasteurise ce lait aromatisé et on l'acidifie par ajout d'au moins un acide organique, de manière à atteindre le pH de filature et à le maintenir jusqu'à l'étape de filature-formage, on l'ensemence avec au moins une souche bactérienne thermophile, on le coagule par ajout de présure, de manière à obtenir un coagulum que l'on découpe en morceaux et que l'on brasse, on égoutte le grain de caillé ainsi réalisé tout en maintenant la température à 28-35°C, de manière à obtenir une masse de fromage de type mozzarella que l'on file et que l'on forme ensuite en unités.

Contre toute attente, on a constaté que le procédé simple et rapide selon l'invention permet de réaliser un fromage de type mozzarella, bien que ne présentant pas une étape d'acidification en moule de 2 à 6h, normalement nécessaire pour la texturation dans le procédé traditionnel.
La supression de l'étape d'acidification, dans le procédé selon l'invention, permet de réaliser un fromage de type mozzarella ayant une meilleure régularité de la texture et une meilleure conservation.
Par ailleurs, on a constaté avec surprise que ce procédé permet de réaliser industriellement du fromage de type mozzarella présentant les qualités organoleptiques et gustatives assez proches de celles d'un fromage de type mozzarella réalisé de manière traditionnelle et artisanale.

Par lait, on entend désigner, un lait d'origine animale, tel que les laits de vache, de chèvre, de brebis, de bufflesse, de zébue, de jument, d'ânesse, de chamelle, etc. Ce lait peut être un lait à l'état natif, un lait reconstitué, un lait écrémé, ou un lait additionné de composés nécessaires à la croissance des bactéries, au traitement du lait, ou aux qualités finales du fromage frais, comme des matières grasses, de l'extrait de levure, de la peptone et/ou un surfactant, par exemple.

Ce lait doit être pasteurisé, c'est à dire doit avoir un subi un traitement de pasteurisation classique. Ces techniques sont bien connues de l'homme du métier.

Dans la suite de la description, on emploiera l'expression "on forme des unité" pour désigner une étape de formage de la masse de fromage de type mozzarella dans des volumes désirés, par entraînement de cette masse plastique dans des formes. De préférence on forme des unités de 5-400 g.

Dans le procédé selon l'invention, on peut fermenter pendant 3-24 h à 30-45° C et à un pH de 4,0-5,5 au moins une fraction de lait avec 0,1-10% d'au moins une souche bactérienne mésophile et/ou d'au moins une souche bactérienne thermophile.

La ou les fractions de lait fermentées avec au moins une souche bactérienne mésophile permettent le développement de la note aromatique spécifique d'un fromage de type mozzarella.

La ou les fractions de lait fermentées avec au moins une souche bactérienne thermophile permettent le développement d'une faible note aromatique et surtout une acidification contribuant à la formation d'un goût spécifique d'un fromage de type mozzarella.

On peut notamment utiliser comme souches bactériennes thermophiles des *Streptococcus thermophilus,* des *Lactobacillus delbrukii* subsp *bulgaricus,* des *Lactobacillus johnsonii* et/ou des *Lactobacillus helveticus* et comme souche bactériennes mésophiles des *Lactococcus lactis* subsp *lactis* biovar *diacétylactis,* des *Leuconostoc mesenteroïdes* subsp *mesenteroïdes,* des *Leuconostoc lactis* et/ou des *Enterococcus faecium.*

On peut notamment utiliser comme souches bactériennes thermophiles, la souche de *Streptococcus thermophilus* CNCM I-1383, déposée le 8 décembre 1993, ou la souche de *Streptococcus thermophilus* CNCM I-141, déposée le 18 mai 1994, selon le traité de Budapest, à la Collection National de Cultures de Microorganismes, INSTITUT PASTEUR, 25 Rue du Docteur Roux, F-75724 PARIS CEDEX 15, France.

On peut notamment utiliser comme somme souches bactériennes mésophiles celles déposées le 19 décembre 1997, selon le Traité de Budapest, à la Collection National de Cultures de Microorganismes, INSTITUT PASTEUR, 25 Rue du Docteur Roux, F-75724 PARIS CEDEX 15, France. Ces souches bactériennes mésophiles sont la souche de *Leuconostoc mesenteroïdes* subsp *mesenteroïdes* CNCM I-1956, la souche de *Leuconostoc mesenteroïdes* subsp *mesenteroïdes* CNCM I-1957, la souche de *Leuconostoc lactis* CNCM I-1958, la souche *d'Enterococcus faecium* CNCM I-1959, la souche de *Lactococcus lactis* subsp *lactis* biovar *diacétylactis* CNCM I-1960, la souche de *Lactococcus lactis* subsp *lactis* biovar *diacétylactis* CNCM I-1961 et/ou la souche de *Lactococcus lactis* subsp *lactis* biovar *diacétylactis* CNCM I-1962 et font l'objet de la présente demande.

De préférence, on fermente pendant 9-12 h à 28-32° C à un pH de 4-4,4 la ou les fractions de lait par au moins une souche bactérienne mésophile.

De préférence, on fermente pendant 4-7 h à 36-40° C à un pH de 4,1-4,5 la ou les fractions de lait par au moins une souche bactérienne thermophile.

On ajoute ensuite une portion de chacune de ces fractions à du lait fermentées, de manière à obtenir un lait aromatisé.

On peut notamment ajouter ces portions à du lait ayant une teneur en matière grasse de 1,5-4%.

De préférence, on ajoute la ou les portions de fractions fermentées avec au moins une souche bactérienne mésophile et/ou au moins une souche bactérienne thermophile, de manière à obtenir un lait aromatisé ayant un pH de 6,35-6,55. On peut ainsi favoriser une déminéralisation partielle du lait aromatisé.

Pour obtenir un tel pH, on peut ajouter la ou les portions de fractions fermentées avec au moins une souche bactérienne mésophile et/ou au moins une souche bactérienne thermophile à raison de 1-10% par rapport au poids total du lait.

On pasteurise alors ce lait aromatisé et on l'acidifie par ajout d'au moins un acide organique, de manière à atteindre le pH de filature et à le maintenir jusqu'à l'étape de filature-formage. On peut atteindre un pH de filature de 5,2-6 et le maintenir jusqu'à l'étape de filature-formage.

On peut acidifier le lait aromatisé par ajout d'acide citrique et/ou d'acide lactique.

On ensemence ensuite le lait aromatique avec au moins une souche bactérienne thermophile, telle que décrite précédement. On peut l'ensemencer avec 1-3% d'au moins une souche bactérienne thermophile, par rapport au poids total du lait aromatisé et on maintient la température à 30-35° C, de manière à ralentir le développement de cette ou de ces souches bactériennes thermophiles, par exemple.

On peut traiter thermiquement jusqu'à 37° C le lait aromatisé, de manière à atteindre la température optimale d'activité de la présure, lors de la coagulation, par exemple.

On peut alors coaguler le lait aromatisé, pendant 15-35 min, par ajout de 6-35 g de presure, selon la force de la présure, pour 100 kg de lait aromatisé, de manière à obtenir un coagulum.

On découpe ensuite ce coagulum en morceaux que l'on brasse, de manière à obtenir un grain de caillé.

On égoutte alors ce grain de caillé en moule, tout en maintenant la température à 28-35° C, de manière à maintenir la valeur de pH fixe et ainsi une teneur en calcium constante. On évite de ce fait une trop forte déminéralisation, ce qui permet d'obtenir une texture constante du fromage de type mozzarella et d'optimiser sa durée de conservation. De plus, en maintenant la température à 28-35° C, on peut ralentir la fermentation du grain de caillé par la ou les souches bactériennes thermophiles, précédement ensemencées, et ainsi optimiser la valeur de la teneur en matière sèche du grain de caillé à une valeur de 35-45%.

On obtient ainsi une masse de fromage de type mozzarella, que l'on découpe, que l'on file et que l'on forme ensuite en unités. De préférence, on forme des unités de 5-400 g que l'on conditionne dans une solution d'eau salée, par addition de 0,1-1% de chlorure de sodium, dans un emballage hermétique en matière plastique rigide ou souple.

De préférence, on maintient la température à 26-32° C depuis l'étape de brassage jusqu'à l'étape de filature-formage.

La présente invention a également pour objet le fromage de type mozzarella obtenu par la mise en oeuvre du procédé. Ce fromage de type mozzarella présente une bonne texture typique et régulière et un goût de type fermier assez proches de ceux d'un fromage de type mozzarella réalisé traditionnellement.

Le procédé de préparation d'un fromage de type mozzarella selon l'invention est décrit plus en détails à l'aide des exemples ci-après. Les pourcentages sont donnés en poids, sauf indication contraire.

### Exemple 1

On prépare un fromage de type mozzarella selon le procédé de l'invention.

Pour ce faire, on fermente pendant 5h à 38° C à un pH de 4,4 une fraction de lait avec 0,4% de la souche *Streptococcus thermophilus* CNCM I-1383 et pendant 10h à 30° C à pH 4,3 une fraction de lait avec 0,4% de la souche *Lactococcus lactis* subsp *lactis* biovar *diacétylactis* CNCM I-1962.

On ajoute ensuite 22 ml de la fraction de lait fermentée par la souche CNCM I-1383 et 35 ml de la fraction fermentée par la souche CNCM I-1962 à 1 l de lait ayant une teneur en matière grasse de 2,9%, de manière à obtenir un lait aromatisé à pH 6,5.

on pasteurise ensuite ce lait aromatisé et on l'acidifie avec 0,74 g d'acide citrique et 1,48 g d'acide lactique en solution à 50%, de manière à atteindre un pH de filature de 5,5 et de le maintenir jusqu'à l'étape de filature-formage.

On traite thermiquement le lait aromatisé ainsi obtenu, de manière à maintenir sa température à 32,5° C pour l'étape de coagulation.

On l'ensemence ensuite avec 1% de la souche bactérienne thermophile *Streptococcus thermophilus* CNCM I-1421.

On le coagule pendant 20 min par ajout de 0,1 g de présure microbienne en poudre au 1/150 000 ème, sous forme de solution diluée à 1 %, de manière à obtenir un coagulum que l'on découpe en morceaux et que l'on brasse. On réalise ainsi un grain de caillé.

On égoutte le grain de caillé en moule, de manière à obtenir une masse de fromage de type mozzarella, que l'on découpe, que l'on file et que l'on forme en unités de 100 g.

Depuis l'étape de brassage jusqu'à l'étape de filature-formage, on maintient la température du milieu à 30° C.

On conditionne alors ces fromages de type mozzarella de 100 g dans des emballages hermétiques en plastique souple, dans lesquels il baignent dans une solution d'eau contenant 0,5% de chlorure de sodium, appelée latticello.

Ces fromages de type mozzarella ont un goût de type fermier et régulier, fonction des souches bactériennes utilisées, et la texture typique et régulière.

### Exemple 2

On prépare un fromage de type mozzarella selon le procédé de l'invention.

Pour ce faire, on fermente pendant 7h à 34° C à un pH de 4,6 une première fraction de lait avec 0,3% de la souche *Leuconostoc mesenteroïdes* subsp *mesenteroïdes* CNCM I-1957, avec 0,3% de la souche *Lactococcus lactis* subsp *lactis* biovar *diacétylactis* CNCM I-1961 et avec 0,3% de la souche *Enterococcus faecium* CNCM I-1959.

On fermente pendant 7h à 30° C à pH 4,6 une deuxième fraction de lait avec 0,4% de la souche *Lactococcus lactis* subsp *lactis* biovar *diacétylactis* CNCM I-1962.

On ajoute ensuite 30 ml de la première fraction de lait fermentée par les souches CNCM I-1961, CNCM I-1957 et CNCM I-1959 et 30 ml de la deuxième fraction de lait fermentée par la souche CNCM I-1962 à 1 l de lait ayant une teneur en matière grasse de 2,9%, de manière à obtenir un lait aromatisé à pH 6,5.

on pasteurise ensuite ce lait aromatisé et on l'acidifie avec 0,74 g d'acide citrique et 1,48 g d'acide lactique en solution à 50%, de manière à atteindre un pH de filature de 5,5 et de le maintenir jusqu'à l'étape de filature-formage.

On traite thermiquement le lait aromatisé ainsi obtenu, de manière à maintenir sa température à 32,5° C pour l'étape de coagulation.

On l'ensemence ensuite avec 1% de la souche bactérienne thermophile *Streptococcus thermophilus* CNCM I-1383.

On le coagule pendant 20 min par ajout de 0,1 g de présure microbienne en poudre au 1/150 000 ème, sous forme de solution diluée à 1 %, de manière à obtenir un coagulum que l'on découpe en morceaux et que l'on brasse. On réalise ainsi un grain de caillé.

On égoutte le grain de caillé en moule, de manière à obtenir une masse de fromage de type mozzarella, que l'on découpe, que l'on file et que l'on forme en unités de 5 g.

Depuis l'étape de brassage jusqu'à l'étape de filature-formage, on maintient la température du milieu à 30° C.

On conditionne alors ces fromages de type mozzarella de 5 g dans des emballages hermétiques en plastique souple, dans lesquels il baignent dans une solution d'eau contenant 0,5% de chlorure de sodium, appelée latticello.

Ces fromages de type mozzarella ont un goût de type fermier et régulier, fonction des souches bactériennes utilisées, et la texture typique et régulière.

## Revendications

1. Procédé de préparation d'un fromage type mozzarella, dans lequel:
- on fermente au moins une fraction de lait avec au moins une souche bactérienne mésophile et/ou au moins une souche bactérienne thermophile,
- on ajoute une portion de chacune de ces fractions à du lait, de manière à obtenir un lait aromatisé,
- on pasteurise ce lait aromatisé et on l'acidifie par ajout d'au moins un acide organique, de manière à atteindre le pH de filature et à le maintenir jusqu'à l'étape de filature-formage,
- on l'ensemence avec au moins une souche bactérienne thermophile,
- on le coagule par ajout de presure, de manière à obtenir un coagulum,
- on découpe ce coagulum en morceaux que l'on brasse,
- on égoutte le grain de caillé ainsi réalisé, de manière à obtenir une masse de fromage de type mozzarella, tout en maintenant la température à 28-35°C,
- et on découpe, on file et on forme ensuite cette masse de fromage de type mozzarella en unités.

2. Procédé selon la revendication 1, dans lequel on utilise comme souches bactériennes mésophiles, pour fermenter au moins une fraction de lait, la souche de *Leuconostoc mesenteroïdes* subsp *mesenteroïdes* CNCM I-1956, la souche de *Leuconostoc mesenteroïdes* subsp *mesenteroïdes* CNCM I-1957, la souche de *Leuconostoc lactis* CNCM I-1958, la souche d'*Enterococcus faecium* CNCM I-1959, la souche de *Lactococcus lactis* subsp *lactis* biovar *diacétylactis* CNCM I-1960, la souche de *Lactococcus lactis* subsp *lactis* biovar *diacétylactis* CNCM I-1961 et/ou la souche de *Lactococcus lactis* subsp *lactis* biovar *diacétylactis* CNCM I-1962.

3. Procédé selon les revendications 1 et 2, dans lequel on fermente pendant 5-24 h à 30-45° C et à un pH de 4,0-5,5 au moins une fraction de lait avec 0,1-10% d'au moins une souche bactérienne mésophile et/ou thermophile.

4. Procédé selon les revendications 1 à 3, dans lequel on ajoute la ou les portions de fractions fermentées avec au moins une souche bactérienne mésophile et/ou au moins une souche bactérienne thermophile, de manière à obtenir un lait aromatisé ayant un pH de 6,35-6,55.

5. Procédé selon les revendications 1 à 4, dans lequel le lait a une teneur en matière grasse de 1,5-4%.

6. Procédé selon les revendications 1 à 5, dans lequel on acidifie le lait aromatisé par ajout d'au moins un acide organique, de manière à atteindre un pH de filature de 5,2-6 et à le maintenir jusqu'à l'étape de filature-formage.

7. Procédé selon les revendications 1 à 6, dans lequel l'acide organique est de l'acide citrique et/ou de l'acide lactique.

8. Procédé selon les revendications 1 à 7, dans lequel on ensemence le lait aromatisé avec 1-3% d'au moins une souche bactérienne thermophile.

9. Procédé selon les revendications 1 à 8, dans lequel on traite thermiquement jusqu'à 30-37° C le lait aromatisé avant de le coaguler.

10. Procédé selon les revendications 1 à 9, dans lequel on coagule pendant 15-35 min le lait aromatisé.

## Claims

1. Method for preparing a mozzerella-type cheese, wherein :
- at least one milk fraction is fermented with at least one mesophilic bacterial strain and/or at least one thermophilic bacterial strain,
- a portion of each of these fractions is added to the milk so as to obtain a flavoured milk,
- this flavoured milk is pasteurised and acidified by adding at least one organic acid so as to reach the stringing pH and to maintain it until the stringing-forming stage,
- it is seeded with at least one thermophilic bacterial strain,
- it is coagulated by adding rennet so as to obtain a coagulum,
- this coagulum is cut up into pieces that are mashed,
- the curd grains produced in this way are drained so as to obtain a mass of mozzarella-type cheese, while maintaining the temperature at 28-35°C,
- and this mass of mozzarella-type cheese is then cut up, strung and formed into units.

2. Method according to claim 1 wherein, as mesophilic bacterial strains for fermenting at least one milk fraction, use is made of the *Leuconostoc mesenteroïdes* subsp *mesenteroïdes* strain CNCM I-1956, the *Leuconostoc mesenteroïdes* subsp *mesenteroïdes* strain CNCM I-1957, the *Leuconostoc lactis* strain CNCM I-1958, the Enterococcus faecium strain CNCM I-1959, the *Lactococcus lactis* subsp *lactis* biovar *diacetylactis* strain CNCM I-1960, the *Lactococcus lactis* subsp *lactis* biovar *diacetylactis* strain CNCM I-1961, and/or the *Lactococcus* *lactis* subsp *lactis* biovar *diacetylactis* strain CNCM I-1962.

3. Method according to claims 1 and 2, wherein at least one milk fraction is fermented for 5-24 h at 30-45°C and at pH 4.0-5.5, with 0.1-10 % of at least one mesophilic and/or thermophilic bacterial strain.

4. Method according to claims 1 to 3, wherein the fermented portion(s) of fractions is/are added to at least one mesophilic bacterial strain and/or at least one thermophilic bacterial strain, so as to obtain a flavoured milk having a pH of 6.35-6.55.

5. Method according to claims 1 to 4, wherein the milk has a fat content of 1.5-4 %.

6. Method according to claims 1 to 5, wherein the flavoured milk is acidified by adding at least one organic acid, so as to reach a stringing pH of 5.2-6 and so as to maintain it until the stringing-forming stage.

7. Method according to claims 1 to 6, wherein the organic acid is citric acid and/or lactic acid.

8. Method according to claims 1 to 7, wherein the flavoured milk is seeded with 1-3 % of at least one thermophilic bacterial strain.

9. Method according to claims 1 to 8, wherein the flavoured milk is heat-treated at 30-37°C before it is coagulated.

10. Method according to claims 1 to 9, wherein the flavoured milk is coagulated for 15-35 min.

## Patentansprüche

1. Verfahren zur Herstellung von Mozarellakäse, bei dem man
- mindestens eine Milchfraktion mit mindestens einem mesophilen Bakterienstamm und/oder mindestens einem thermophilen Bakterienstamm fermentiert,
- einen Anteil von jeder dieser Fraktionen Milch so zusetzt, daß man aromatisierte Milch erhält,
- die aromatisierte Milch pasteurisiert und durch Zusatz von mindestens einer organischen Säure so ansäuert, daß der pH-Wert der Ausbildung der fasrigen Textur erreicht wird und bis zum Schritt der Ausbildung der fasrigen Textur und der Formung beibehalten wird,
- sie mit mindestens einem thermophilen Bakterienstamm beimpft,
- sie durch Zusatz von Lab so koaguliert, daß man ein Koagulat erhält,
- das Koagulat in Stücke schneidet, die man rührt,
- das auf diese Weise gebildete Bruchkorn abtropft, so daß man eine Mozarellakäsemasse erhält, wobei man die Temperatur auf 28-35°C hält,
- und diese Mozarellakäsemasse zerschneidet, ihre fasrige Textur ausbildet und sie dann zu Einheiten formt.

2. Verfahren nach Anspruch 1, bei dem man als mesophile Bakterienschichten zum Fermentieren mindestens einer Milchfraktion den Stamm *Leuconostoc mesenteroides* subsp. *mesenteroides* CNCM I-1956, den Stamm *Leuconostoc mesenteroides* subsp. *mesenteroides* CNCM I-1957, den Stamm *Leuconostoc lactis.* CNCM I-1958, den Stamm *Enterococcus faecium* CNCM I-1959, den Stamm *Lactococcus lactis* subsp. *lactis* biovar *diacetylactis* CNCM I-1960, den Stamm *Lactococcus lactis* subsp. *lactis* biovar *diacetylactis* CNCM I-1961 und/oder den Stamm *Lactococcus lactis* subsp. *lactis* biovar *diacetylactis* CNCM I-1962 verwendet.

3. Verfahren nach den Ansprüchen 1 und 2, bei dem man während 5-24 h bei 30-45°C und bei einem pH von 4,0-5,5 mindestens eine Milchfraktion mit 0,1-10% mindestens eines mesophilen und/oder thermophilen Bakterienstamms fermentiert.

4. Verfahren nach den Ansprüchen 1 bis 3, bei dem man den oder die Anteile von mit mindestens einem mesophilen Bakterienstamm und/oder mindestens einem thermophilen Bakterienstamm fermentierten Fraktionen so zusetzt, daß man aromatisierte Milch mit einem pH von 6,35-6,55 erhält.

5. Verfahren nach den Ansprüchen 1 bis 4, bei dem die Milch einen Fettgehalt von 1,5-4% besitzt.

6. Verfahren nach den Ansprüchen 1 bis 5, bei dem man die aromatisierte Milch durch Zusatz von mindestens einer organischen Säure so ansäuert, daß ein pH der Ausbildung der fasrigen Textur von 5,2-6 erreicht wird und bis zum Schritt der Ausbildung der fasrigen Textur und der Formung beibehalten wird.

7. Verfahren nach den Ansprüchen 1 bis 6, bei dem die organische Säure Citronensäure und/oder Milchsäure ist.

8. Verfahren nach den Ansprüchen 1 bis 7, bei dem man die aromatisierte Milch mit 1-3% mindestens eines thermophilen Bakterienstamms beimpft.

9. Verfahren nach den Ansprüchen 1 bis 8, bei dem man die aromatisierte Milch vor dem Koagulieren thermisch bis zu 30-37°C behandelt.

10. Verfahren nach einem der Ansprüche 1 bis 9, bei dem man die aromatisierte Milch während 15-35 min koaguliert.
